# EUROPÄISCHE PATENTANMELDUNG

(11) **EP 4 008 887 A1**
(43) Veröffentlichungstag der Anmeldung: **08.06.2022**
(21) Anmeldenummer: 20212246.1
(22) Anmeldetag: 07.12.2020
(51) Int. Cl.: F01N 3/20, F02B 37/00

(54) **ABGASANLAGE FÜR EINEN VERBRENNUNGSMOTOR**

(71) Anmelder: BMTS Technology GmbH & Co. KG, 70376 Stuttgart (DE)
(72) Erfinder: ROGASCH, René, 70736 Fellbach (DE); VOGLER, Rainer, 71397 Leutenbach (DE)
(74) Vertreter: Herrmann, Jochen

(57) **Zusammenfassung**

Abgasanlage für einen Verbrennungsmotor (10) mit einem Abgasturbolader (20), einem Katalysator (30) und einer Abgasleitung (11), wobei der Abgasturbolader (20) ein Turbinenrad (21) aufweist, das ausgebildet ist, um bei aktiviertem Verbrennungsmotor (10) mittels eines in der Abgasleitung (11) führbaren Abgasstrom des Verbrennungsmotors (10) angetrieben zu werden, wobei der Katalysator (30) einer Abgasführung (12) der Abgasleitung (11) zugeordnet ist, um das in der Abgasleitung (11) geführte Abgas zu reinigen, und wobei eine Heizung vorgesehen ist, die ausgebildet ist, um den Katalysator (30) zu beheizen. Um bei einer solchen Abgasanlage den Katalysator (30) auch dann gleichmäßig beheizen zu können, wenn der Verbrennungsmotor (10) abgeschaltet ist, ist es erfindungsgemäß vorgesehen, dass in Strömungsrichtung nach dem Katalysator (30) ein Rückführkanal (15) von der Abgasleitung (11) abzweigt, und dass der Rückführkanal (15) über eine Zuleitung (17) in Strömungsrichtung vor dem Katalysator (30) an die Abgasleitung (11) mittelbar oder unmittelbar angeschlossen ist, um bei abgeschaltetem Verbrennungsmotor (10) eine Gasströmung über den Rückführkanal (15) zu ermöglichen.

## Beschreibung

Die Erfindung betrifft eine Abgasanlage für einen Verbrennungsmotor mit einem Abgasturbolader, einem Katalysator und einer Abgasleitung, wobei der Abgasturbolader eine Turbine aufweist, die ausgebildet ist, um bei eingeschaltetem Verbrennungsmotor mittels eines in der Abgasleitung führbaren Abgasstrom des Verbrennungsmotors angetrieben zu werden, wobei der Katalysator einer Abgasanlage der Abgasleitung zugeordnet ist, um das in der Abgasleitung geführte Abgas zu reinigen, und wobei eine Heizung vorgesehen ist, die ausgebildet ist, um den Katalysator zu beheizen.

Um den zukünftigen Abgasgesetzgebungen zu entsprechen, werden immer mehr Fahrzeuge als Hybridfahrzeuge auf den Markt gebracht. Das Fahrzeug kann dabei rein elektrisch, rein mit Verbrennungsmotor oder aus einer Kombination mit beiden Motoren betrieben werden. Der Verbrennungsmotor wird dabei durch einen Abgasturbolader aufgeladen.

Wird das Fahrzeug rein elektrisch betrieben, bleibt die Abgasanlage in kaltem Zustand. Beim Wechsel von elektrischem Fahrbetrieb in den Fahrbetrieb mit Verbrennungsmotor kann die Abgasanlage die für die zukünftige Abgasgrenzwerte gültigen Grenzwerte noch nicht realisieren, da die Monolithen des Katalysators zur Reinigung des Abgases noch keine Betriebstemperatur haben.

Um den Katalysator der Abgasanlage auf Betriebstemperatur zu bringen, noch bevor der Fahrbetrieb auf Verbrennungsmotor umgeschaltet wird, wird dieser durch zusätzliche elektrische Heizelemente vorgeheizt. Die Abgasanlage kann somit direkt bei Start des Verbrennungsmotors die Abgase reinigen und den Abgasgesetzgebungen entsprechen.

Die durch zusätzliche Heizelemente eingebrachte Wärmeenergie verteilt sich jedoch nicht gleichmäßig über die komplette Abgasanlage hinweg. Es können sogenannte Hotspots entstehen, welche zu einer Schädigung der Monolithen oder weiterer umgebender Bauteile führen.

Es ist Aufgabe der Erfindung, einen dauerhaft zuverlässigen Betrieb des Katalysators zu garantieren.

Diese Aufgabe wird dadurch gelöst, dass in Strömungsrichtung nach dem Katalysator ein Rückführkanal von der Abgasleitung abzweigt, und dass der Rückführkanal über eine Zuleitung in Strömungsrichtung vor dem Katalysator an die Abgasleitung mittelbar oder unmittelbar angeschlossen ist.

Erfindungsgemäß wird dann, wenn der Verbrennungsmotor nicht in Betrieb ist, ein Gasmassen-, insbesondere Luftmassestrom erzeugt, um die Wärmeenergie im Katalysator gleichmäßig zu verteilen. Dadurch wird der Katalysator gleichmäßig erwärmt und somit einer Schädigung vorgebeugt. Der Gasmassenstrom wird dabei im Zirkulationsbetrieb durch den Katalysator geführt. Dies ermöglicht einen energieoptimierten Betrieb.

Im Betrieb des Verbrennungsmotors, wird der Katalysator aktiv durch den Abgasmassenstrom beheizt. Dieses thermische Niveau kann ausgenutzt werden, um den Katalysator bei inaktiven Verbrennungsmotoren durch den Zirkulationsbetrieb weiter zu beheizen. Liegt der Katalysator auf einem nicht ausreichend hohen thermischen Niveau, so wird mit einer separaten Heizeinrichtung dieser erwärmt und dabei der Gasmassenstrom im Zirkulationsbetrieb durch den Katalysator geführt.

Der zusätzliche Gasmassestrom kann beispielsweise von einer Pumpe bereitgestellt werden und vorzugsweise in das Turbinengehäuse des Abgasturboladers eingeleitet. Der Gasmassestrom wird dann über das Turbinengehäuse in die Abgasanlage eingeleitet und die Wärmeenergie über die Abgasanlage, insbesondere den Katalysator gleichmäßig verteilt. Dadurch werden in besonders optimaler Weise Hotspots im Katalysator vermieden.

Die separate Einleitstelle am Turbinengehäuse kann sich sowohl vor als auch nach dem Turbinenrad befinden. Bei der Positionierung der Einleitstelle ist vorzugsweise darauf zu achten, dass diese in Strömungsrichtung des eigentlichen Abgasmassestromes im Turbinengehäuse angeordnet ist, um die negativen Störeffekte der Einleitstelle auf geringem Niveau zu halten.

Eine erfindungsgemäße Abgasanlage kann dadurch gekennzeichnet sein, dass der Abgasturbolader das Turbinengehäuse aufweist, dass das Turbinengehäuse das Turbinenrad aufnimmt und einen Expansionskanal aufweist, der insbesondere einen das Turbinenrad zumindest bereichsweise umgebenden Spiralkanal aufweisen kann, und dass die Zuleitung in den Expansionskanal mündet. Der über die Zuleitung zugeleitete Gasstrom treibt dann, wenn er in Strömungsrichtung vor dem Turbinenrad oder in den Spiralkanal eingeleitet wird das Turbinenrad im Turbinengehäuse an. Der Expansionskanal wird für eine gleichmäßige Verteilung dieses Gasstroms in der Abgasanlage genutzt. Dadurch wird die Bildung von Hotspots im Katalysator zuverlässig verhindert.

Entsprechend kann es beispielsweise vorgesehen sein, dass der Expansionskanal von einem Abgasanschluss des Turbinengehäuses zu einem Abgasauslass des Turbinengehäuses geführt ist, wobei im Betrieb die Gasströmung durch den Expansionskanal von dem Abgasanschluss zu dem Gasauslass führbar ist, und dass die Zuleitung in Strömungsrichtung vor dem Spiralkanal in den Expansionskanal mündet oder dass die Zuleitung in den Spiralkanal mündet.

Gemäß einer bevorzugten Erfindungsvariante kann es vorgesehen sein, dass das Turbinengehäuse eine Kanalwand aufweist, die den Expansionskanal begrenzt, dass in der Kanalwand eine Öffnung vorgesehen ist, und dass im Bereich der Öffnung ein Stutzen des Turbinengehäuses gebildet ist, an den die Zuleitung mittels eines Anschlusselements anschließbar ist. An dem Stutzen kann die Zuleitung lösbar angeschlossen werden, was sich insbesondere für Montage- oder Wartungsarbeiten als vorteilhaft erweist.

Wie dies oben erwähnt wurde, sollte die Einleitstelle in Strömungsrichtung des eigentlichen Abgasmassestromes im Turbinengehäuse angeordnet sein, um die negativen Störeffekte der Einleitstelle auf geringem Niveau zu halten. Um diese Störeffekte niedrig zu halten, kann es insbesondere vorgesehen sein, dass ein Stutzen an die Rückführleitung anschließbar ist, der einen Leitungsbereich der Zuleitung bildet, wobei der Leitungsbereich eine Mittellängsachse aufweist und wobei diese Mittellängsachse im Winkel kleiner 90° zu der Strömungsrichtung im Expansionskanal des Turbinengehäuses verläuft.

Der lösbare Anschluss der Zuleitung an dem Anschlusselement kann einfach dadurch gelöst werden, dass das Anschlusselement ein Rohrstück aufweist, an das die Zuleitung, vorzugsweise lösbar, angeschlossen ist. Hierbei kann es insbesondere auch vorgesehen sein, dass das Anschlusselement mittels eines Flansches mit dem Turbinengehäuse verbunden ist, wobei insbesondere vorgesehen ist, dass der Flansch das Rohrstück trägt.

Hinter der Abgasanlage kann sich ein Ventil befinden, um die bereits erwärmte Luft erneut in das Turbinengehäuse einzuleiten. Somit entsteht ein Kreislauf der erwärmten Luft und es ist weniger elektrische Energie notwendig, um die Abgasanlage zu erwärmen.

Der zusätzliche Luftmassestrom durch die Pumpe kann erfindungsgemäß abgeschaltet werden, sobald der Fahrbetrieb auf Verbrennungsmotor umgeschaltet ist.

Gemäß einer bevorzugten Ausgestaltungsvariante der Erfindung kann es vorgesehen sein, dass eine Gasfördereinrichtung vorgesehen ist, die dazu ausgebildet ist, eine Gasströmung durch die Rückführleitung und die Zuleitung zu bewirken, wobei insbesondere vorgesehen ist, dass die Gasfördereinrichtung in die Rückführleitung integriert und in Strömungsrichtung vor der Einleitstelle der Zuleitung in die Abgasleitung angeordnet ist. Bei stehendem Verbrennungsmotor kann die Gasfördereinrichtung, die beispielsweise von der oben erwähnten Pumpe gebildet sein kann, betrieben werden, um die Gasströmung im Zirkulationsbetrieb zu führen. Wenn die Gasfördereinrichtung in die Rückführleitung integriert ist, dann behindert sie den Abgasstrom in der Abgasanlage nicht.

Eine weitere Erfindungsausgestaltung kann dergestalt sein, dass eine Heizeinrichtung der Heizung vorgesehen ist, die angeordnet und dazu ausgebildet ist, eine Gasströmung, welche durch die Rückführleitung und die Zuleitung führbar ist, zu erwärmen. Die Heizeinrichtung kann dabei an beliebiger Stelle angeordnet sein, um während des Zirkulationsbetriebs Wärmeenergie in den zirkulierenden Gasstrom einzubringen.

Beispielsweise kann die Heizung der Heizeinrichtung dem Katalysator zugeordnet sein.

Es ist auch denkbar, dass die Heizung im Bereich nach der Zuleitung und vor der Rückführleitung angeordnet ist.

Denkbar ist es, dass eine Rohrheizung verwendet ist, die von außen Wärmeenergie in den von einem Rohr umgebenen Gas-Führungsbereich einträgt.

Besonders bevorzugt ist es vorgesehen, dass die Heizeinrichtung dem Katalysator zugeordnet ist. Zusätzlich oder alternativ kann die Heizeinrichtung mit einer Heizung auch in oder an der Rückführleitung integriert und in Strömungsrichtung vor der Einleitstelle der Zuleitung in die Abgasleitung angeordnet sein. In der Rückführleitung behindert die Heizung den Abgasmassenstrom während des Normalbetriebs des Verbrennungsmotors nicht.

Es hat sich gezeigt, dass ein vorteilhafter Betrieb der Fördereinrichtung dann entsteht, wenn diese Fördereinrichtung in Strömungsrichtung vor der Heizeinrichtung angeordnet ist. Dementsprechend ist die Heizeinrichtung auf der Druckseite der Fördereinrichtung positioniert, was für eine effektive Durchströmung der Heizeinrichtung vorteilhaft ist.

Eine bevorzugte Erfindungsvariante kann dergestalt sein, dass eine Luftführung vorgesehen ist, über die Umgebungsluft in die Rückführleitung förderbar ist, wobei insbesondere vorgesehen ist, dass die Luftführung in die Fördereinrichtung mündet. Diese ermöglicht es auf einfache Weise, dass bei abgeschaltetem Verbrennungsmotor stets ein ausreichendes Gasvolumen im Kreislauf zirkuliert wird.

Vorzugsweise kann es gemäß einer weiteren Erfindungsvariante vorgesehen sein, dass an der Abzweigstelle des Rückführkanals von der Abgasleitung ein Ventil vorgesehen ist, wobei in einer ersten Schaltstellung des Ventils eine luftleitende Verbindung zwischen einem vom Katalysator kommenden Leitungsbereich der Abgasleitung und dem Rückführkanal vorhanden ist, und dass in einer zweiten Schaltstellung des Ventils die luftleitende Verbindung zwischen dem Abgaskanal und dem Rückführkanal gesperrt ist. Wenn sich der Verbrennungsmotor im eingeschalteten Zustand befindet, kann die luftleitende Verbindung zwischen dem Abgaskanal und dem Rückführkanal gesperrt werden (zweite Schaltstellung). Befindet sich der Verbrennungsmotor im ausgeschalteten Zustand, so wird das Ventil in seine erste Schaltstellung verbracht und der Luftweg zwischen der Abgasleitung und dem Rückführkanal ist für den Zirkulationsbetrieb freigegeben.

Eine besonders vorteilhafte Erfindungsvariante ist dergestalt, dass das Turbinenrad drehfest mit einer Welle verbunden ist, dass die Welle ein Verdichterrad des Turboladers trägt, dass der über die Zuleitung geförderten Gasstrom auf die Schaufeln des Turbinenrads derart geleitet ist, und dass mittels des Gasstroms das Turbinenrad und mit diesem das Verdichterrad angetrieben wird. Wenn bei ausgeschaltetem Verbrennungsmotor der Gasstrom zur Beheizung des Katalysators im Zirkulationsbetrieb geführt wird, so bewirkt dieser zirkulierende Gasstrom gleichzeitig über das Turbinenrad einen Antrieb des Verdichterrads. Entsprechend verdichtet das Verdichterrad Luft, die bereit steht, beim Anspringen des Verbrennungsmotors von diesem genutzt zu werden. Springt der Verbrennungsmotor an, so kann diese Verbrennungsluft mit hohem Druck in die Brennkammern des Verbrennungsmotors gelangen und für eine effektive Verbrennung genutzt werden. Auf diese Weise wird das Anspringverhalten des Verbrennungsmotors deutlich verbessert.

Im Rahmen der Erfindung kann es auch vorgesehen sein, dass das Turbinengehäuse mit einem Lagergehäuse verbunden ist, wobei in dem Lagergehäuse die Welle mittels einer Lagerung, die insbesondere eine hydrodynamische Gleitlagerung aufweisen kann, gelagert ist.

Wenn eine hydrodynamische Gleitlagerung zur Lagerung der Welle verwendet wird, so muss sichergestellt werden, dass bei ausgeschaltetem Verbrennungsmotor die hydrodynamische Gleitlagerung ausreichend mit Schmiermittel versorgt wird. Es kann daher im Rahmen der Erfindung vorgesehen sein, dass bei ausgeschaltetem Verbrennungsmotor eine Schmiermittelpumpe des Schmiermittelkreislaufes für die hydrodynamische Gleitlagerung dann aktiviert wird, wenn der Gasstrom über die Rückführleitung zirkuliert wird.

Die Erfindung wird im Folgenden anhand eines in den Zeichnungen dargestellten Ausführungsbeispiels näher erläutert. Es zeigen:
Figur 1: eine Prinzip-Darstellung einer erfindungsgemäßen Abgasanlage mit einem Verbrennungsmotor,
Figur 2: einen Abgasturbolader in Seitenansicht,
Figur 3: den Abgasturbolader gemäß Figur 2 teilweise im Schnitt,
Figur 4: ein Detail des Abgasturboladers gemäß den Figuren 2 und 3 und
Figur 5 einen Schnitt durch das Detail gemäß Figur 4.

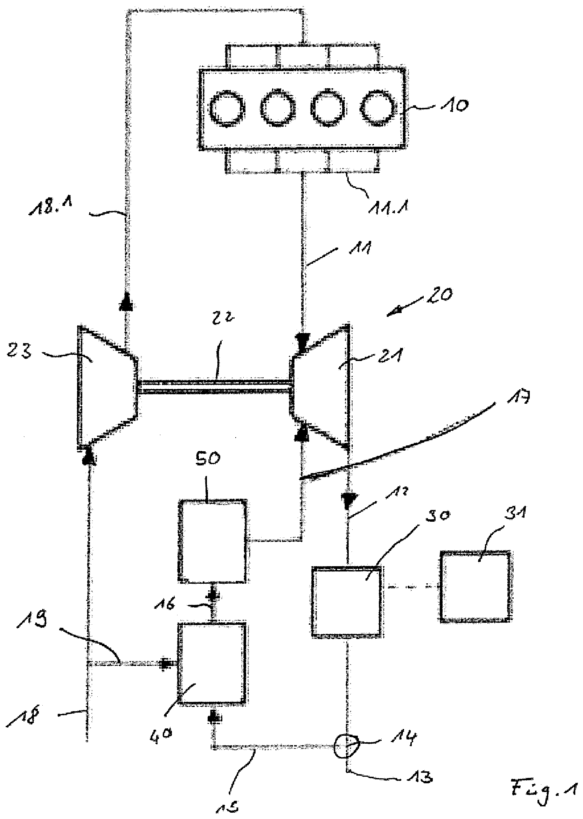

Figur 1 zeigt eine Prinzip-Darstellung einer Abgasanlage mit einem Verbrennungsmotor 10. Der Verbrennungsmotor 10 kann beispielsweise als Benzin- oder Dieselmotor ausgebildet sein. Der Verbrennungsmotor 10 weist einen Sammler 11.1 der Abgasanlage auf. Mittels des Sammlers 11.1 kann das Abgas aus den Brennkammern des Verbrennungsmotors 10 gesammelt und in eine Abgasleitung 11 überführt werden.

Es ist weiterhin ein Abgasturbolader 20 vorgesehen, der ein Turbinenrad 21 aufweist, welches drehfest an eine Welle 22 angeschlossen sein kann. Mit der Welle 22 kann ein Verdichterrad 23 drehfest gekoppelt sein.

Die Abgasleitung 11 ist der Eingangsseite des Turbinenrads 21 zugeführt. An der Ausgangsseite des Turbinenrads 21 ist eine Abgasführung 12 der Abgasleitung 11 angeschlossen. In Strömungsrichtung nach dem Turbinenrad 21 führt die Abgasführung 12 zu einem Katalysator 30.

Im Anschluss an den Katalysator 30 geht die Abgasleitung 11 in eine Ableitung 13 über. Über die Ableitung 13 kann das vom Katalysator 30 gereinigte Abgas abgeführt werden.

Wie Figur 1 veranschaulicht kann dem Katalysator 30 eine Katalysator-Heizung 31 einer Heizeinrichtung zugeordnet sein. Mittels der Katalysator-Heizung 31 kann Wärmeenergie in den Monolithen des Katalysators 30 eingetragen werden, um diesen zu heizen.

Von der Ableitung 13 zweigt ein Rückführkanal 15 ab. Dieser Rückführkanal 15 führt zu einer Fördereinrichtung 40, die insbesondere als Pumpe ausgebildet sein kann. Der von der Fördereinrichtung 40 verdichtete Gas-Massenstrom kann aus der Pumpe heraus und über ein Verbindungsstück 16 zu einer Heizeinrichtung 50 der Heizung geführt werden. Der aus der Heizeinrichtung 50 herausgeführte Gasstrom wird über eine Zuleitung 17 zu einer Eingangsseite des Turbinenrads 21 geführt.

Wie Figur 1 weiter erkennen lässt, ist an die Eingangsseite des Verdichterrads 23 eine Luftzuführung 18 angeschlossen. Von der Ausgangsseite des Verdichterrads 23 geht eine Versorgungsleitung 18.1 ab. Über die Versorgungsleitung 18.1 kann dem Verbrennungsmotor 10 mittelbar oder unmittelbar verdichtete Verbrennungsluft zugeleitet werden.

Wie Figur 1 weiter zeigt, kann von der Luftzuführung 18 eine Luftführung 19 abzweigen, die in den Bereich des Rückführkanals 15, insbesondere unmittelbar in die Fördereinrichtung 40 mündet.

Wie Figur 1 zeigt, weist die Heizung die Katalysator-Heizung 31 und die Heizeinrichtung 50 auf. Im Rahmen der Erfindung kann es jedoch auch vorgesehen sein, dass nur die Katalysator-Heizung 31 oder nur die Heizeinrichtung 50 vorgesehen ist.

Während des normalen Arbeitsbetriebs des Verbrennungsmotors 10 wird ein Abgasstrom erzeugt, der über den Sammler 11.1 und die Abgasleitung 11 zu dem Turbinenrad 21 geführt wird. Dieser Abgasstrom wird über das Turbinenrad 21 entspannt. Hierdurch wird das Turbinenrad 21 und mit ihm die Welle 22 in Drehbewegung versetzt. Die Welle 22 treibt das Verdichterrad 23 an. Auf diese Weise wird der Verbrennungsmotor 10 mit komprimierter Verbrennungsluft versorgt. Im Anschluss an das Turbinenrad 21 wird der Abgasstrom über die Abgasführung 12 zu dem Katalysator 30 geführt und dort gereinigt. Der Abgasstrom verlässt die Ableitung 13 anschließend.

Ist, wie bei der vorliegenden Erfindung der Verbrennungsmotor 10 in einem Hybridfahrzeug betrieben, welcher gleichzeitig einen Elektromotor zur Bereitstellung von Antriebsleistung aufweist, so wird der Verbrennungsmotor 10 dann abgeschaltet, wenn der Elektromotor den Antrieb übernimmt. Im abgeschalteten Zustand des Verbrennungsmotors 10 wird kein Abgasstrom erzeugt.

Wenn der Verbrennungsmotor 10 abgeschaltet wird oder ist, so wird über eine Steuereinrichtung der abgeschaltete Zustand erkannt und die Fördereinrichtung 40 aktiviert. Gleichzeitig oder zeitlich versetzt kann auch ein Ventil 14 aktiviert werden.

Das Ventil 14 dient dazu, den Luftweg zwischen der Abgasführung 12 und der Ableitung 13 zu sperren und den Luftweg von der Abgasführung 12 in den Rückführkanal 15 freizugeben. Hierzu kann beispielsweise ein elektrisch schaltbares Dreiwegeventil verwendet werden.

Wenn die Fördereinrichtung 40 aktiviert wird, so wird ein Gasstrom, vorliegend ein Luftstrom im über die Rückführleitung 15 im Kreislauf geführt. Dabei wird über die Luftführung 19 ein Druckniveau in der Rückführleitung 15 sichergestellt, welches garantiert, dass ausreichend Luft im Zirkulationsbetrieb zur Verfügung steht.

Die Fördereinrichtung 40 fördert den Gasstrom über das Verbindungsstück 16 zu der Heizeinrichtung 50. Darin wird der Gasstrom erwärmt. Anschließend wird der erwärmte Gasstrom über die Zuleitung 17 dem Turbinenrad 21 zugeleitet.

Der Gasstrom kann dabei in Strömungsrichtung vor oder nach dem Turbinenrad 21 eingeleitet werden. Denkbar ist es auch, dass der Gasstrom unmittelbar auf das Turbinenrad 21 geleitet wird. Vorzugsweise ist es jedoch so, dass der Gasstrom vor dem Turbinenrad 21 eingeleitet wird. Mit dem Gasstrom kann das Turbinenrad 21 in Drehbewegung versetzt werden. Das Turbinenrad 21 fördert den Gasstrom gleichmäßig verteilt in die Abgasführung 12. Anschließend gelangt der erwärmte Gasstrom in den Katalysator 30, erwärmt diesen oder hält diesen auf einem gleichmäßig hohen Temperaturniveau. Anschließend gelangt der Gasstrom wieder in den Rückführkanal 15 und kann so im Kreislauf geführt werden. Auf diese Weise wird sichergestellt, dass bei ausgeschaltetem Verbrennungsmotor der Katalysator 30 stets ausreichend beheizt wird.

Wie dies vorstehend beschrieben wurde, kann der im Kreislauf geführte Gasstrom über die Heizeinrichtung 50 erwärmt werden. Zusätzlich oder alternativ kann es jedoch auch vorgesehen sein, dass die Katalysator-Heizung 31 zu diesem Zweck verwendet wird.

Wenn der Verbrennungsmotor 10 aktiviert (und der Elektromotor ausgeschaltet) wird, so schaltet das Ventil 14 und gibt die Verbindung zwischen der Abgasführung 12 und der Ableitung 13 frei. Weiterhin werden über eine Steuereinrichtung die Fördereinrichtung 40 und die Heizeinrichtung 50 abgeschaltet (Katalysator-Heizung 31 und/oder Heizeinrichtung 50). Der Abgasstrom kann nun vom Verbrennungsmotor 10 kommend über die Ableitung 13 abgeleitet werden.

Dabei ist es so, dass das Abgas nun den beheizten Katalysator 30 durchströmt. Dieser kann nun seine vollen Funktionen ordnungsgemäß erfüllen und unmittelbar das Abgas reinigen. Über den vorgeschalteten Zirkulationsbetrieb wird sichergestellt, dass der Katalysator 30 gleichmäßig beheizt ist und damit Hotspots im Katalysator 30 vermieden sind.

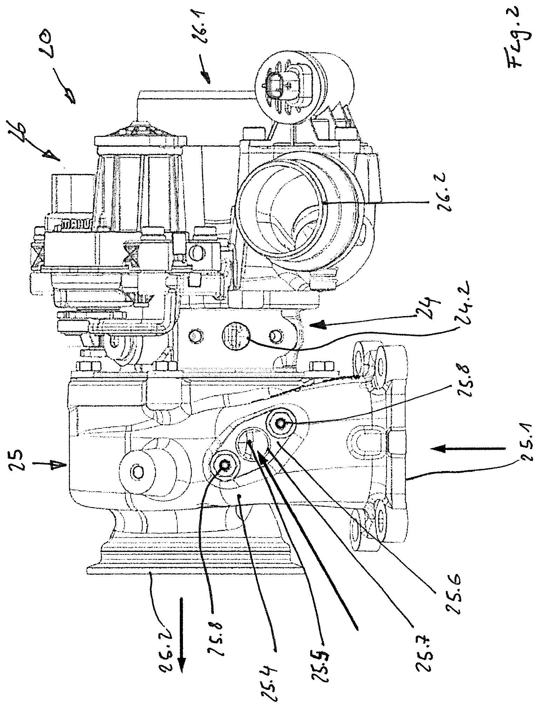

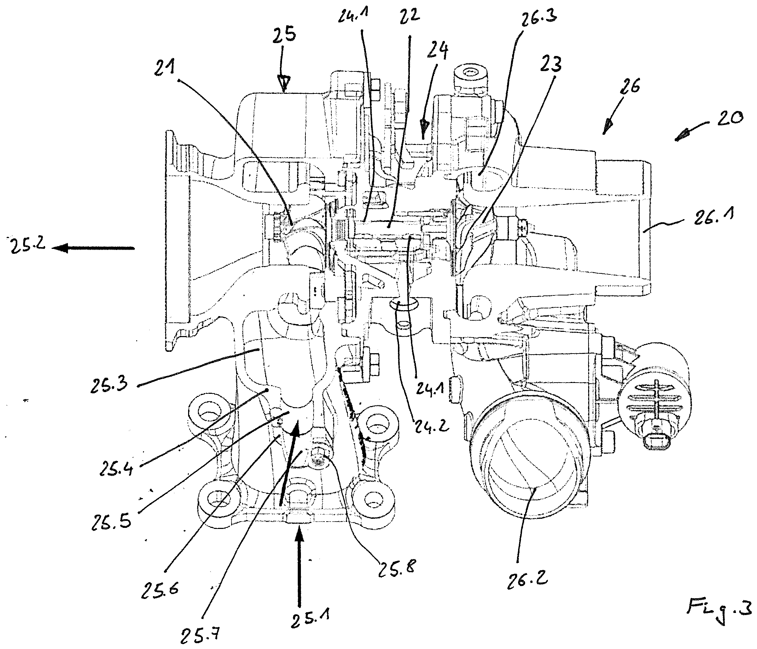

Figur 2 und 3 zeigt eine Ausführungsform eines Abgasturboladers 20. Wie diese Darstellungen zeigen, weist der Abgasturbolader das Turbinenrad 21 und das über die Welle 22 drehfest gekoppelte Verdichterrad 23 auf.

Das Turbinenrad 21 ist in einem Turbinengehäuse 25 untergebracht. Das Turbinengehäuse 25 weist einen Abgasanschluss 25.1 auf, an den die Abgasleitung 11 angeschlossen werden kann. Weiterhin weist das Turbinengehäuse 25 einen Abgasanschluss 25.2 auf, an den die Abgasführung 12 angeschlossen werden kann.

Im Bereich zwischen dem Abgasanschluss 25.1 und dem Abgasanschluss 25.2 ist ein Expansionskanal 25.3 im Turbinengehäuse 25 ausgebildet. Dieser Expansionskanal 25.3 kann einen Spiralkanal aufweisen, der zumindest bereichsweise um das Turbinenrad 21 herum angeordnet ist. Das über den Abgasanschluss 25.1 zugeführte Abgas wird in den Expansionskanal 25.3 eingeleitet und über den Spiralkanal dem Turbinenrad 21 zugeleitet. Am Turbinenrad 21 wird der Abgasstrom entspannt und über den Abgasanschluss 25.2 abgeleitet. Zur Ausbildung des Expansionskanals 25.3 weist das Turbinengehäuse 25 eine Kanalwand 25.4 auf

Wie die Zeichnungen erkennen lassen, kann die Kanalwand 25.4 eine Öffnung 25.5 aufweisen. Diese Öffnung 25.5 mündet in den Expansionskanal 25.3. Dabei kann die Öffnung 25.5 in Strömungsrichtung vor dem Turbinenrad 21 vor dem Spiralkanal oder in den Spiralkanal münden.

An die Öffnung 25.5 kann die Zuleitung 17 angeschlossen werden. Denkbar ist es, dass zum Anschluss der Zuleitung 17 ein Anschlusselement 25.6 verwendet ist, welches lösbar mit dem Turbinengehäuse 25 verbunden werden kann.

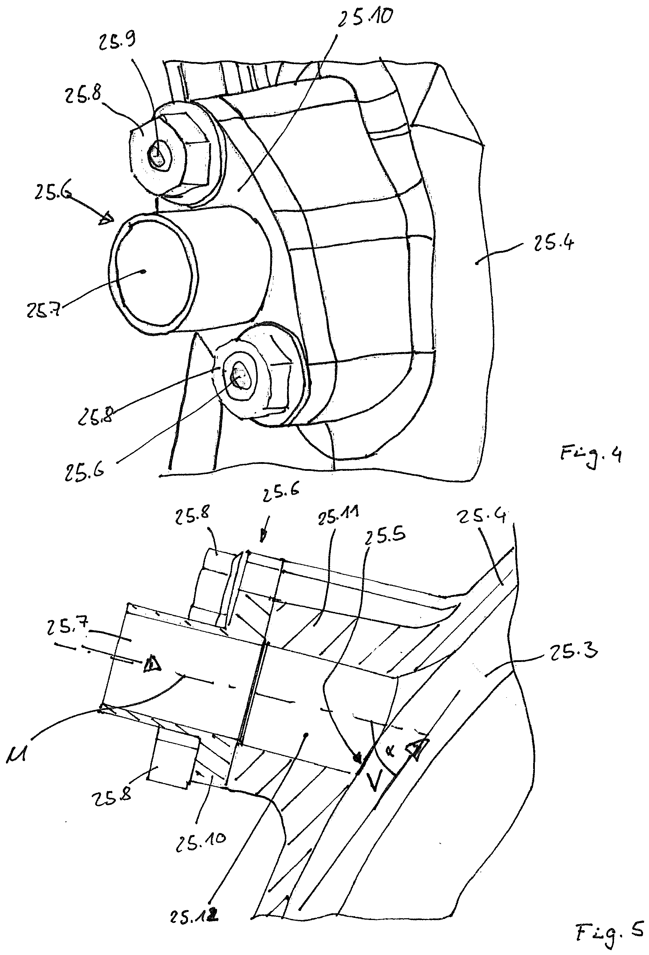

Das Anschlusselement 25.6 kann beispielsweise einen Flansch 25.10 aufweisen, der mit einem Rohrstück 25.7 verbunden ist, wie dies beispielsweise die Figuren 4 und 5 zeigen. Dabei kann insbesondere vorgesehen sein, dass das Rohrstück 25.7 einteilig an den Flansch 25.10 angeschlossen ist. Das Rohrstück 25.7 dient zur lösbaren Verbindung eines Abschnitts der Zuleitung 17.

Die Öffnung 25.5 wird von einem Stutzen 25.11 gebildet, welcher einteilig mit der Kanalwand 25.4 des Turbinengehäuses 25 verbunden ist. Der Stutzen 25.11 umgibt einen Leitungsbereich 25.12 der Zuleitung 17. Zur Befestigung des Anschlusselements 25.6 können Befestigungselemente 25.8, beispielsweise Schraubelemente, verwendet sein, die durch Schraubaufnahmen des Flansches 25.10 hindurchgeführt sind. Vorzugsweise sind am Turbinengehäuse 25 Stehbolzen 25.9 mit Außengewinden gehalten. Auf diese wird der Flansch 25.10 mit seinen Befestigungsaufnahmen aufgeschoben. Mittels aufgeschraubte Muttern lässt sich dann der Flansch 25.10 mit dem Stutzen 25.11 gasdicht verbinden, wobei insbesondere zwischen dem Flansch 25.10 und dem Stutzen 25.11 eine Dichtung vorgesehen sein kann.

Wie Figur 5 zeigt, bildet sich im Expansionskanal 25.3 während des Betriebs des Verbrennungsmotors ein Abgasstrom aus, der in Strömungsrichtung V verläuft. Die Mittellängsachse M des Leitungsbereichs 25.12 der Zuleitung 17 verläuft im Winkel α < 90° zu der Strömungsrichtung des Abgasstroms. Auf diese Weise wird die Einleitstelle der Zuleitung 17 strömungsoptimiert ausgebildet.

Figuren 3 und 4 zeigen weiterhin, dass das Verdichterrad 23 in einem Verdichtergehäuse 26 angeordnet ist. Das Verdichtergehäuse 26 bildet einen Luftanschluss 26.1, an den die Luftzuführung 18 angeschlossen werden kann. Weiterhin bildet das Verdichtergehäuse 26 in Strömungsrichtung nach dem Verdichterrad 23 eine Ableitung 26.2. An diese kann die Versorgungsleitung 18.1 angeschlossen werden. Zwischen dem Luftanschluss 26.1 und der Ableitung 26.2 ist ein Verdichterkanal 26.3 gebildet, in dem das Verdichterrad 23 angeordnet ist.

Die oben erwähnte Welle 22, welche das Turbinenrad 21 mit dem Verdichterrad 22 verbindet, ist in einem Lagergehäuse 24 gelagert. Das Lagergehäuse 24 kann räumlich zwischen dem Verdichtergehäuse 26 und dem Turbinengehäuse 25 angeordnet sein. Denkbar ist es, dass das Lagergehäuse 24 Teil des Verdichtergehäuse 26 oder des Turbinengehäuses 25 ist.

Zur Lagerung der Welle 22 kann eine Wälzkörperlagerung und/oder eine Gleitlagerung, insbesondere eine hydrodynamische Gleitlagerung verwendet sein.

Bei Verwendung einer hydrodynamischen Gleitlagerung zur Lagerung der Welle 22 kann im Lagergehäuse 24 ein Schmiermittelkanal vorgesehen sein, der über eine Schmiermittelzufuhr 24.2 an eine Schmiermittelversorgung mit einer Schmiermittelpumpe angeschlossen ist. Über die Schmiermittelzufuhr 24.2 wird der Lagerung 24.1 Schmiermittel, während des Betriebszustands bei eingeschaltetem Verbrennungsmotor 10, zugeführt. Wenn der Verbrennungsmotor 10 abgeschaltet wird und die Fördereinrichtung 40 aktiviert wird, so wird die Welle 22 über das Turbinenrad 21 in Drehbewegung versetzt. Um bei diesem Betriebszustand ebenfalls eine ausreichende Lagerung der Welle 22 garantieren zu können, wird bei ausgeschaltetem Verbrennungsmotor 10 und eingeschalteter Fördereinrichtung 40 die Schmiermittelversorgung ebenfalls aktiviert oder im Betriebszustand gehalten, sodass ausreichend Schmiermittel über die Schmiermittelzufuhr 24.2 zur Verfügung gestellt wird.

Gemäß der Erfindung wird eine Abgasanlage für einen Verbrennungsmotor 10 zur Verfügung gestellt, mit Abgasturbolader 20, Katalysator 30 und Abgasleitung 11. Während des Betriebs des Verbrennungsmotors 10 wird das Turbinenrad 21 mit dem in der Abgasleitung 11 geführten Abgasstrom des Verbrennungsmotors 10 angetrieben und der Katalysator 30 reinigt dabei das Abgas. Bei ausgeschaltetem Verbrennungsmotor und aktiviertem Elektromotor eines Hybridfahrzeuges, wird der Katalysator beheizt, wozu in Strömungsrichtung nach dem Katalysator 30 ein Rückführkanal 15 von der Abgasleitung 11 abzweigt, und der Rückführkanal 15 über eine Zuleitung 17 in Strömungsrichtung vor dem Katalysator 30 an die Abgasleitung 11 mittelbar oder unmittelbar angeschlossen ist. In dem so gebildeten Kreislauf ist eine Heizung integriert, um den zirkulierenden Gasstrom zu beheizen.

## Patentansprüche

1. Abgasanlage für einen Verbrennungsmotor (10) mit einem Abgasturbolader (20), einem Katalysator (30) und einer Abgasleitung (11), wobei der Abgasturbolader (20) ein Turbinenrad (21) aufweist, das ausgebildet ist, um bei aktiviertem Verbrennungsmotor (10) mittels eines in der Abgasleitung (11) führbaren Abgasstrom des Verbrennungsmotors (10) angetrieben zu werden, wobei der Katalysator (30) einer Abgasführung (12) der Abgasleitung (11) zugeordnet ist, um das in der Abgasleitung (11) geführte Abgas zu reinigen, und wobei eine Heizung vorgesehen ist, die ausgebildet ist, um den Katalysator (30) zu beheizen,
**dadurch gekennzeichnet,**
**dass** in Strömungsrichtung nach dem Katalysator (30) ein Rückführkanal (15) von der Abgasleitung (11) abzweigt, und dass der Rückführkanal (15) über eine Zuleitung (17) in Strömungsrichtung vor dem Katalysator (30) an die Abgasleitung (11) mittelbar oder unmittelbar angeschlossen ist, um bei abgeschaltetem Verbrennungsmotor (10) eine Gasströmung über den Rückführkanal (15) zu ermöglichen.

2. Abgasanlage nach Anspruch 1, **dadurch gekennzeichnet, dass** eine Gasfördereinrichtung (40) vorgesehen ist, die dazu ausgebildet ist, eine Gasströmung durch die Rückführleitung (14) und die Zuleitung (17) zu bewirken, wobei insbesondere vorgesehen ist, dass die Gasfördereinrichtung (40) in die Rückführleitung (14) integriert und in Strömungsrichtung vor der Einleitstelle der Zuleitung (17) in die Abgasleitung (11) angeordnet ist.

3. Abgasanlage nach Anspruch 1 oder 2, **dadurch gekennzeichnet, dass** eine Heizeinrichtung (50) der Heizung vorgesehen ist, die angeordnet und dazu ausgebildet ist, eine Gasströmung, welche durch die Rückführleitung (14) und die Zuleitung (17) führbar ist, zu erwärmen, wobei insbesondere vorgesehen ist, dass die Heizeinrichtung (50) in die Rückführleitung (14) integriert und in Strömungsrichtung vor der Einleitstelle der Zuleitung (17) in die Abgasleitung (11) angeordnet ist.

4. Abgasanlage nach Anspruch 2 oder 3, **dadurch gekennzeichnet, dass** die Fördereinrichtung (40) in Strömungsrichtung vor der Heizeinrichtung (50) angeordnet ist.

5. Abgasanlage nach einem der Ansprüche 1 bis 4, **dadurch gekennzeichnet, dass** eine Luftführung (19) vorgesehen ist, über die Umgebungsluft in die Rückführleitung (15) förderbar ist, wobei insbesondere vorgesehen ist, dass die Luftführung (19) in die Fördereinrichtung (40) mündet.

6. Abgasanlage nach einem der Ansprüche 1 bis 5, **dadurch gekennzeichnet, dass** der Abgasturbolader (20) ein Turbinengehäuse (25) aufweist, dass das Turbinengehäuse (25) das Turbinenrad (21) aufnimmt und einen Expansionskanal (25.3) aufweist, der insbesondere einen das Turbinenrad (21) zumindest bereichsweise umgebenden Spiralkanal aufweisen kann, und dass die Zuleitung (17) in den Expansionskanal (25.3) mündet.

7. Abgasanlage nach Anspruch 6, **dadurch gekennzeichnet, dass** der Expansionskanal (25.3) von einem Abgasanschluss (25.1) des Turbinengehäuses (25) zu einem Abgasauslass (25.2) des Turbinengehäuses geführt ist, wobei im Betrieb die Gasströmung durch den Expansionskanal (25.3) von dem Abgasanschluss (25.1) zu dem Gasauslass (25.2) führbar ist, und dass die Zuleitung (17) in Strömungsrichtung vor dem Spiralkanal in den Expansionskanal (25.3) mündet oder das die Zuleitung (17) in den Spiralkanal mündet.

8. Abgasanlage nach einem der Ansprüche 6 oder 7, **dadurch gekennzeichnet, dass** das Turbinengehäuse (25) eine Kanalwand (25.4) aufweist, die den Expansionskanal (25.3) begrenzt, dass in der Kanalwand (25.4) eine Öffnung (25.5) vorgesehen ist, und dass im Bereich der Öffnung (25.5) ein Stutzen (25.11) des Turbinengehäuses (25) gebildet ist, an den die Zuleitung (17) mittels eines Anschlusselements (25.6) anschließbar ist.

9. Abgasanlage nach Anspruch 8, **dadurch gekennzeichnet, dass** der Stutzen (25.11) einen Leitungsbereich (25.12) der Zuleitung (17) bildet, wobei der Leitungsbereich (25.12) eine Mittellängsachse (M) aufweist und wobei die Mittellängsachse (M) im Winkel kleiner 90° zu der Strömungsrichtung (v) im Expansionskanal (25.3) verläuft.

10. Abgasanlage nach einem der Ansprüche 6 bis 9, **dadurch gekennzeichnet, dass** das Anschlusselement (25.6) ein Rohrstück (25.7) aufweist, an das die Zuleitung (17) vorzugsweise lösbar angeschlossen ist.

11. Abgasanlage nach einem der Ansprüche 6 bis 10, **dadurch gekennzeichnet, dass** das Anschlusselement (25.6) mittels eines Flansches (25.10) mit dem Turbinengehäuse (25) verbunden ist, wobei insbesondere vorgesehen ist, dass der Flansch (25.10) das Rohrstück (25.7) trägt.

12. Abgasanlage nach einem der Ansprüche 1 bis 11, **dadurch gekennzeichnet, dass** der Katalysator (30) eine Katalysator-Heizung (31) der Heizung aufweist.

13. Abgasanlage nach einem der Ansprüche 1 bis 12, **dadurch gekennzeichnet, dass** an der Abzweigstelle des Rückführkanals (14) von der Abgasleitung (11) ein Ventil (14) vorgesehen ist, wobei in einer ersten Schaltstellung des Ventils (14) eine luftleitende Verbindung zwischen einem vom Katalysator (30) kommenden Leitungsbereich der Abgasleitung (11) und dem Rückführkanal (15) vorhanden ist, und dass in einer 2. Schaltstellung des Ventils (14) die luftleitende Verbindung zwischen dem Abgaskanal (11) und dem Rückführkanal (15) gesperrt ist.

14. Abgasanlage nach einem der Ansprüche 1 bis 13, **dadurch gekennzeichnet, dass** das Turbinenrad (21) drehfest mit einer Welle (22) verbunden ist, dass die Welle (22) ein Verdichterrad (23) trägt, dass der über die Zuleitung (17) geförderte Gasstrom auf die Schaufeln des Turbinenrads (21) derart geleitet ist, und dass mittels des Gasstroms das Turbinenrad (21) angetrieben wird.

15. Abgasanlage nach einem der Ansprüche 1 bis 14 **dadurch gekennzeichnet, dass** das Turbinengehäuse (25) mit einem Lagergehäuse (24) verbunden ist, wobei in dem Lagergehäuse (24) die Welle (22) mittels einer Lagerung (24.1), die insbesondere eine hydrodynamische Gleitlagerung aufweisen kann, gelagert ist.
